(19) Europäisches Patentamt / European Patent Office / Office européen des brevets

(11) **EP 2 719 532 B1**

(12) # EUROPÄISCHE PATENTSCHRIFT

(45) Veröffentlichungstag und Bekanntmachung des Hinweises auf die Patenterteilung:
**01.07.2015 Patentblatt 2015/27**

(51) Int Cl.:
***B32B 27/06*** *(2006.01)* ***B32B 27/10*** *(2006.01)*
***C09D 5/00*** *(2006.01)* ***C09J 133/08*** *(2006.01)*

(21) Anmeldenummer: **13186958.8**

(22) Anmeldetag: **01.10.2013**

(54) **Verwendung einer Klebstoffdispersion für die Folienkaschierung**

Use of an adhesive dispersion for film lamination

Utilisation d'une dispersion d'adhésif pour le laminage de films

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.10.2012 EP 12188413**

(43) Veröffentlichungstag der Anmeldung:
**16.04.2014 Patentblatt 2014/16**

(73) Patentinhaber:
- **BASF SE**
  **67056 Ludwigshafen (DE)**
- **BASF Schweiz AG**
  **4057 Basel (CH)**
  Benannte Vertragsstaaten:
  **CY**

(72) Erfinder:
- **Dimmer, Jörg-Alexander**
  **68161 Mannheim (DE)**
- **Pietsch, Ines**
  **67346 Speyer (DE)**
- **Heckhoff, Lars**
  **69517 Gorxheimertal (DE)**
- **Harrer, Heinrich**
  **67697 Otterberg (DE)**

(56) Entgegenhaltungen:
**EP-A1- 1 420 055 EP-A2- 1 316 597**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 719 532 B1

Printed by Jouve, 75001 PARIS (FR)

## Beschreibung

Die Erfindung betrifft die Verwendung einer Klebstoffdispersion für die Glanzfolienkaschierung, wobei die Klebstoffdispersion mindestens ein in Wasser dispergiertes Polymer enthält, welches gebildet ist durch Emulsionscopolymerisation aus einem Monomergemisch, enthaltend (a) bestimmte Hauptmonomere, (b) C1 bis C20 Hydroxyalkyl(meth)acrylate, (c) ethylenisch ungesättigte, radikalisch polymerisierbare Monomere mit mindestens einer Glycidylgruppe und (d) optional Säuremonomere. Die Erfindung betrifft auch ein Verfahren zur Folienkaschierung, die damit hergestellten Laminate sowie für die Verwendung in dem Verfahren geeignete Klebstoffdispersionen.

Es besteht ein großer Bedarf an kostengünstigen Klebstoffen für die Folienkaschierung, insbesondere für die Glanzfolienkaschierung mit guten anwendungstechnischen Eigenschaften, z.B. für flexible Nahrungsmittelverpackungen oder für mit Glanzfolien beschichtete Druckerzeugnisse. Es wurden Klebstoffsysteme auf Basis von organischen Lösungsmitteln eingesetzt, aber zur Reduzierung von organischen Lösemittelemissionen werden wasserbasierte Klebstoffsysteme bevorzugt. Hierbei handelt es sich in der Regel um wässrige Polymerdispersionen. Besondere Bedeutung haben Acrylatesterpolymerdispersionen, auch bekannt als Acrylatlatex. Auf Acrylatester basierte Klebstoffe sind z.B. beschrieben in WO 98/23656, WO 00/50480, EP 0 622 434 A1, EP 900651 A, DE 10 2005 022 166 A1 und EP 1 171 539.

Eine Problematik bei der Verwendung von wässrigen Polymerdispersionen für Folienkaschieranwendungen besteht darin, dass einerseits das Molekulargewicht oder die Kettenlänge der Polymere möglichst hoch sein sollte, um die erforderliche hohe Kohäsion des aus der Polymerdispersion nach Beschichtung und Trocknung erhaltenen Klebstofffilms zu gewährleisten. Andererseits führt ein hohes Molekulargewicht zu einer hohen Viskosität der Polymerdispersion, was die Beschichtbarkeit beeinträchtigt. Häufig weisen die dispergierten Polymere daher vernetzbare Gruppen auf, mit deren Hilfe ein weiterer Molekulargewichtsaufbau durch Vernetzungsreaktionen nach der Auftragung auf einem Substrat bewirkt werden kann, was wiederum eine erhöhte Kohäsion bewirken kann. Bekannt sind Systeme auf Basis von Acrylatlatex mit einer Kombination von Ketomonomeren wie z.B. DAAM (Diacetonacrylamid) mit Dihydraziden, z.B. ADDH (Adipindihydrazid), siehe z.B. EP 0 148 386. Nachteilig an diesen Systemen ist, dass sie einen zusätzlichen Prozessschritt enthalten, um ADDH zuzusetzen. Wenn ohne Qualitätseinbußen auf diesen Schritt verzichtet werden könnte, ließen sich Produktionszeit und Produktionskosten einsparen.

Eine weitere Problematik besteht bei der Glanzfolienkaschierung. Bei der Glanzfolienkaschierung werden häufig Druckerzeugnisse mit einer transparenten Polymerfolie kaschiert, wobei die erhaltenen Laminate geprägt oder genutet werden. Wichtig ist eine möglichst hohe Nutstandfestigkeit, d.h. dass im Bereich der Nutung oder Prägung die Verklebung mit der Polymerfolie möglichst stabil ist. Hierfür ist in der Regel eine möglichst hohe Kohäsion (innere Haftung) des Klebstoffs erforderlich. Andererseits wird eine möglichst hohe Farbsättigung des Druckbildes der Druckerzeugnisse gewünscht. Hierfür ist in der Regel eine hohe thermoplastische Verformbarkeit des Klebstoffs erforderlich, damit der Klebstoff die Druckfarbe gut umschließen kann. Die für eine hohe Nutstandfestigkeit gewünschte hohe Kohäsion beeinträchtigt allerdings die thermoplastische Verformbarkeit.

Es bestand daher die Herausforderung, einen Klebstoff zur Verfügung zu stellen, mit welchem die anscheinend gegenläufigen Anforderungen von hoher Nutstandfestigkeit einerseits und hoher Farbsättigung des Druckbildes andererseits gleichzeitig möglichst gut erfüllt werden. Die Aufgabe bestand außerdem darin, alternative Klebstoffsysteme für die Folienkaschierung zur Verfügung zu stellen, bei welchen sich die nachträgliche Zugabe eines Vernetzers vermeiden lässt, um Zeit und Prozesskosten einzusparen, welche sich möglichst gut verarbeiten, und beschichten lassen, möglichst einfach und kostengünstig in der Herstellung und in der Handhabbarkeit sind und welche möglichst gute Klebeeigenschaften bei Laminieranwendungen aufweisen.

Es wurde gefunden, dass die Aufgabe gelöst werden kann durch die Verwendung der nachfolgend näher erläuterten Klebstoffdispersionen. Gegenstand der Erfindung ist die Verwendung einer Klebstoffdispersion für die Glanzfolienkaschierung, wobei die Klebstoffdispersion mindestens ein in Wasser dispergiertes Polymer enthält, welches gebildet ist durch Emulsionscopolymerisation aus einem Monomergemisch, enthaltend

(a) mindestens 40 Gew.%, vorzugsweise 50 bis 98,4 Gew.% mindestens eines Hauptmonomeren, ausgewählt aus C1 bis C20 Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen, (Meth)acrylamide oder Mischungen dieser Monomeren;
(b) mindestens 1 Gew.%, vorzugsweise 2 bis 20 Gew.% mindestens eines C1 bis C20 Hydroxyalkyl(meth)acrylats,
(c) mindestens 0,6 Gew.%, vorzugsweise 1 bis 5 Gew.% mindestens eines ethylenisch ungesättigten, radikalisch polymerisierbaren Monomers mit mindestens einer Glycidylgruppe,
(d) 0 bis 10 Gew.%, vorzugsweise 0,1 bis 5 Gew.% mindestens eines Säuremonomers.

Die erfindungsgemäß verwendete Klebstoffdispersion enthält als wesentlichen Bestandteil ein Polymer, welches durch Emulsionspolymerisation hergestellt wird; bei dem dispergierten Polymer handelt es sich daher um ein

Emulsionspolymerisat.

Im Folgenden wird die Bezeichnung (Meth)acrylat und ähnliche Bezeichnungen als abkürzende Schreibweise verwendet für "Acrylat oder Methacrylat".

Das Polymer wird aus einer ersten Monomerart (a) hergestellt. Die Monomerart (a) ist zu mindestens 40 Gew.%, vorzugsweise zu mindestens 50 Gew.-%, besonders bevorzugt zu mindestens 60 Gew.-% und vorzugsweise bis zu 98,4 Gew.% oder bis zu 96,5 Gew.%, z.B. von 50 bis 98,4 oder von 60 bis 98,4 Gew.%, bezogen auf die Gesamtmenge der zur Herstellung des Polymers eingesetzten Monomere, enthalten. Die Monomere (a) sind ausgewählt aus C1 bis C20 Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen, (Meth)acrylamide oder Mischungen dieser Monomeren.

Monomere (a) sind z. B. (Meth)acrylsäurealkylester mit einem $C_1$-$C_{10}$-Alkylrest, wie Methylmethacrylat, Methylacrylat, n-Butylacrylat, Ethylacrylat und 2-Ethylhexylacrylat. Insbesondere sind auch Mischungen der (Meth)acrylsäurealkylester geeignet. Vinylester von Carbonsäuren mit 1 bis 20 C-Atomen sind z. B. Vinyllaurat, Vinylstearat, Vinylpropionat, Versaticsäurevinylester und Vinylacetat. Als vinylaromatische Verbindungen kommen Vinyltoluol, alpha- und para-Methylstyrol, alpha-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt wird Vinylether von 1 bis 4 C-Atome enthaltenden Alkoholen. Als Kohlenwasserstoffe mit 4 bis 8 C-Atomen und zwei olefinischen Doppelbindungen seien Butadien, Isopren und Chloropren genannt. (Meth)acrylamide sind z.B. Acrylamid und Methacrylamid.

In einer Ausführungsform wird eine Monomermischung eingesetzt, enthaltend

(a1) mindestens 40 Gew.%, vorzugsweise 50 bis 80 Gew.% mindestens eines weichen Monomers, welches, wenn es als Homopolymer polymerisiert ist, eine Glasübergangstemperatur von 0 °C oder weniger, vorzugsweise von -20 °C oder weniger aufweist und

(a2) mindestens 1 Gew.%, vorzugsweise 5 bis 30 Gew.% mindestens eines harten Monomers, welches, wenn es als Homopolymer polymerisiert ist, eine Glasübergangstemperatur von mehr als 0 °C oder mindestens 20 °C, vorzugsweise mindestens 50 °C aufweist.

Die Glasübergangstemperatur lässt sich durch bekannte Methoden z.B. Differential Scanning Calorimetrie (z.B. ASTM 3418/82, sog. "midpoint temperature") bestimmen.

Die Monomere (a1) sind vorzugsweise ausgewählt aus C4- bis C10 Alkylacrylaten, insbesondere $C_4$- bis $C_8$-Alkylacrylaten, vorzugsweise aus n-Butylacrylat, n-Hexylacrylat, Octylacrylat und 2-Ethylhexylacrylat sowie Mischungen dieser Monomere.

Die Monomere (a2) sind vorzugsweise ausgewählt aus von den Monomeren (a1) verschiedenen C1-C10 Alkyl(meth)acrylaten und Vinylaromaten, vorzugsweise aus Methylmethacrylat, Styrol und deren Gemisch.

Das Polymer wird aus einer zweiten Monomerart (b) hergestellt. Die Monomerart (b) ist zu mindestens 1 Gew.%, vorzugsweise zu 2 bis 20 Gew.% oder zu 2 bis 15 Gew.% oder zu 2 bis 10 Gew.%, bezogen auf die Gesamtmenge der zur Herstellung des Polymers eingesetzten Monomere, enthalten. Monomerart (b) ist mindestens ein C1 bis C20 Hydroxyalkyl(meth)acrylat. Geeignete Monomere (b) sind z.B. ausgewählt aus Hydroxyethyl(meth)acrylat und Hydroxypropyl(meth)acrylat, Hydroxybutyl(meth)acrylat und deren Gemisch. Bevorzugt sind Hydroxyethyl(meth)acrylat und Hydroxypropyl (meth)acrylat.

Das Polymer wird aus einer weiteren Monomerart (c) hergestellt. Die Monomerart (c) ist zu mindestens 0,6 Gew.%, vorzugsweise 1 bis 5 Gew.% bezogen auf die Gesamtmenge der zur Herstellung des Polymers eingesetzten Monomere, enthalten. Das Gewichtsverhältnis von Monomer (b) zu Monomer (c) beträgt vorzugsweise von 1:20 bis 20 : 1 oder von 1:1 bis 20:1 oder von 2:1 bis 10:1.

Monomerart (c) ist ausgewählt aus ethylenisch ungesättigten, radikalisch polymerisierbaren Monomeren mit mindestens einer Glycidylgruppe. Geeignet sind z.B. monoethylenisch ungesättigte Monoepoxide, z.B. Glycidylzimtsäureester, Glycidylcrotonat, Glycidylitaconat, Glycidylnorbornenylester, Glycidylnorbornenylether und ähnliche. Bevorzugte Monomere (c) mit Glycidylgruppe sind Glycidyl(meth)acrylat (2,3-Epoxypropyl-(meth)acrylat). Besonders bevorzugt ist Glycidylmethacrylat (GMA).

Das Polymer wird aus einer weiteren Monomerart (d) hergestellt. Die Monomerart (d) kann zu 0 bis 10 Gew.%, vorzugsweise 0,1 bis 5 Gew.%, besonders bevorzugt 0,2 bis 4 Gew. % bezogen auf die Gesamtmenge der zur Herstellung des Polymers eingesetzten Monomere, enthalten sein. Monomere (d) sind eine oder mehrere Säuremonomere. Säuremonomere sind ethylenisch ungesättigte, radikalisch polymerisierbare Monomere, welche mindestens eine Säuregruppe aufweisen. Säuremonomere sind beispielsweise ethylenisch ungesättigte Carbonsäuren, ethylenisch ungesättigte Sulfonsäuren und Vinylphosphonsäure. Als ethylenisch ungesättigte Carbonsäuren werden vorzugsweise 3 bis 6

C-Atome im Molekül aufweisende alpha,beta-monoethylenisch ungesättigte Mono- und Dicarbonsäuren eingesetzt. Beispiele hierfür sind Acrylsäure, Methacrylsäure, Itaconsäure, Maleinsäure, Fumarsäure, Crotonsäure, Vinylessigsäure und Vinylmilchsäure. Als ethylenisch ungesättigte Sulfonsäuren eignen sich beispielsweise Vinylsulfonsäure, Styrolsulfonsäure, Acrylamidomethylpropansulfonsäure, Sulfopropylacrylat und Sulfopropylmethacrylat. Bevorzugt sind Acrylsäure und Methacrylsäure und deren Gemisch, besonders bevorzugt ist Acrylsäure.

Ein bevorzugtes Polymer ist z. B. wie folgt aufgebaut aus:

(a1) 50 bis 80 Gew.% mindestens eines weichen Monomers, ausgewählt aus der Gruppe bestehend aus n-Butylacrylat, n-Hexylacrylat, Octylacrylat und 2-Ethylhexylacrylat sowie Mischungen dieser Monomere,
(a2) 5 bis 30 Gew.% mindestens eines harten Monomers, ausgewählt aus der Gruppe bestehend aus Methylmethacrylat, Styrol und deren Mischung,
(b) 2 bis 20 Gew.% mindestens eines C1 bis C10 Hydroxyalkyl(meth)acrylats,
(c) 1 bis 5 Gew.% Glycidyl(meth)acrylat und
(d) 0 bis 5 Gew.% mindestens eines Säuremonomers, ausgewählt aus Acrylsäure, Methacrylsäure und deren Gemisch.

Die Glasübergangstemperatur des Polymers ist vorzugsweise kleiner oder gleich 15 °C, z.B. im Bereich von -29 °C bis +15 °C, insbesondere von -25 °C bis +10 °C. Durch gezielte Variation von Art und Menge der Monomeren ist es dem Fachmann erfindungsgemäß möglich, wässrige Polymerzusammensetzungen herzustellen, deren Polymere eine Glasübergangstemperatur im gewünschten Bereich aufweisen. Die Glasübergangstemperatur lässt sich nach üblichen Methoden wie Differential Scanning Calorimetrie (ASTM 3418/82, sog. "midpoint temperature") bestimmen.

Eine Orientierung ist mittels der Fox-Gleichung möglich. Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für eine Berechnung der Glasübergangstemperatur von Mischpolymerisaten in guter Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die Tg-Werte für die Homopolymerisate der meisten Monomeren sind bekannt und z.B. in Ullmann's Encyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J. Wiley, New York 1975, und 3rd Ed. J. Wiley, New York 1989. Für Ethylacrylat wird ein Wert von -13 °C verwendet.

Die Herstellung des Polymers kann durch Emulsionspolymerisation erfolgen, es handelt sich dann um Emulsionspolymerisate, wobei die oben genannten ethylenisch ungesättigten, radikalisch polymerisierbaren Monomere durch radikalisch initiierte Emulsionspolymerisation in Wasser polymerisiert werden. Um die Dispergierung der Monomeren in dem wässrigen Medium zu unterstützen, kann man die üblicherweise als Dispergiermittel eingesetzten Schutzkolloide und/oder Emulgatoren verwenden.

Eine ausführliche Beschreibung geeigneter Schutzkolloide findet man in Houben-Weyl, Methoden der organischen Chemie, Band XIV/1, Makromolekulare Stoffe, Georg-Thieme-Verlag, Stuttgart, 1961, Seiten 411 bis 420. Als Emulgatoren kommen sowohl anionische, kationische als auch nichtionische grenzflächenaktive Stoffe in Betracht, deren zahlenmittleres Molekulargewicht üblicherweise unterhalb von 2000 g/mol oder vorzugsweise unterhalb von 1500 g/mol liegt, während das zahlenmittlere Molekulargewicht der Schutzkolloide oberhalb von 2000 g/mol liegt, beispielsweise von 2000 bis 100000 g/mol, insbesondere von 5000 bis 50000 g/mol. Vorzugsweise werden anionische und nichtionische Emulgatoren als grenz-flächenaktive Substanzen verwendet. Geeignete Emulgatoren sind beispielsweise ethoxylierte $C_8$- bis Cse-Fettalkohole mit einem Ethoxylierungsgrad von 3 bis 50, ethoxylierte Mono-, Di- und Tri- $C_4$- bis $C_{12}$-Alkylphenole mit einem Ethoxylierungsgrad von 3 bis 50, Alkalimetallsalze von Dialkylestern der Sulfobernsteinsäure, Alkalimetall- und Ammoniumsalze von $C_8$- bis $C_{12}$-Alkylsulfaten, Alkalimetall- und Ammoniumsalze von $C_{12}$- bis $C_{18}$-Alkylsulfonsäuren und Alkalimetall- und Ammoniumsalze von $C_9$- bis $C_{18}$-Alkylarylsulfonsäuren. Kationaktive Emulgatoren sind z.B. Verbindungen mit mindestens einer Amino- oder Ammoniumgruppe und mindestens einer C8-C22-Alkylgruppe. Falls Emulgatoren und/oder Schutzkolloide als Hilfsmittel zum Dispergieren der Monomeren mit verwendet werden, betragen die davon verwendeten Mengen beispielsweise 0,1 bis 5 Gew.-%, bezogen auf die Monomeren. Handelsnamen von Emulgatoren sind z. B. Dowfax®2 A1, Emulan® NP 50, Dextrol® OC 50, Emulgator 825, Emulgator 825 S, Emulan® OG, Texapon® NSO, Nekanil® 904 S, Lumiten® I-RA, Lumiten E 3065, Disponil FES 77, Lutensol AT 18, Steinapol VSL, Emulphor NPS 25. Die grenzflächenaktive Substanz wird üblicherweise in Mengen von 0,1 bis 10 Gew.-%, bezogen auf die zu polymerisierenden Monomeren verwendet.

Bei der Emulsionspolymerisation werden üblicherweise wasserlösliche Initiatoren für die radikalische Polymerisation der Monomere verwendet. Wasserlösliche Initiatoren für die Emulsionspolymerisation sind z. B. Ammonium- und Alkalimetallsalze der Peroxidischwefelsäure, z. B. Natriumperoxodisulfat, Wasserstoffperoxid oder organische Peroxide, z. B. tert.-Butylhydroperoxid. Geeignet sind auch sogenannte Reduktions-Oxidations(Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z. B. um die bereits vorstehend genannten Initiatoren für die Emulsionspolymerisation. Bei der Reduktionskomponenten handelt es sich z. B. um Alkalimetallsalze der schwefligen Säure, wie z.B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z. B. Ascorbinsäure/Eisen(II)sulfat/Natrium-peroxidisulfat, tert-Butylhydroperoxid/ Natriumdisulfit, tert-Butylhydroperoxid/Na-Hydroxymethansulfinsäure. Die einzelnen Komponenten, z. B. die Reduktionskomponente, können auch Mischungen sein z. B. eine Mischung aus dem Natriumsalz der Hydroxymethansulfinsäure und Natriumdisulfit. Die genannten Verbindungen werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung. Die Menge der Initiatoren beträgt im Allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Polymerisation können auch Polymerisationsregler, kurz Regler, eingesetzt werden. Regler bewirken eine Kettenabbruchsreaktion und verringern somit das Molgewicht des Polymeren. Die Regler werden dabei an das Polymer gebunden, im Allgemeinen an das Kettenende. Die Menge der Regler kann insbesondere 0,05 bis 4 Gew. Teile, besonders bevorzugt 0,05 bis 0,8 Gew.-Teile und ganz besonders bevorzugt 0,1 bis 0,6 Gew. Teile, bezogen auf 100 Gew.-Teile der zu polymerisierenden Monomeren betragen. Geeignete Regler sind insbesondere Verbindungen mit einer Mercaptogruppe wie tert.-Butylmercaptan, Thioglycolsäureethylester, Mercaptoethynol, Mercaptopropyltrimethoxysilan oder tert.-Dodecylmercaptan. Bei den Reglern handelt es sich im Allgemeinen um niedermolekulare Verbindungen mit einem Molgewicht kleiner 2000, insbesondere kleiner 1000 g/mol.

Die Emulsionspolymerisation erfolgt in der Regel bei 30 bis 130, vorzugsweise 50 bis 90°C. Das Polymerisationsmedium kann sowohl nur aus Wasser, als auch aus Mischungen aus Wasser und damit mischbaren Flüssigkeiten wie Methanol, Ethanol oder Tetrahydrofuran bestehen. Vorzugsweise wird nur Wasser verwendet.

Die Monomerzufuhr kann als Batchprozess, kontinuierlich oder stufenweise erfolgen. Das Zulaufverfahren kann in Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im Einzelnen hängt dies von der chemischen Natur des Initiatorsystems als auch von der Polymersiationstemperatur ab. Vorzugsweise wird ein Teil vorgelegt und der Rest nach Maßgabe des Verbrauchs der Polymerisationszone zugeführt. Falls ein Molekulargewichtsregler verwendet wird, kann auch der Regler zum Teil vorgelegt werden, ganz oder teilweise während der Polymerisation oder gegen Ende der Polymerisation zugegeben werden.

Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81 083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach der für eine niedrige Viskosität angestrebten Teilchengrößenverteilung.

Die Monomeren werden vorzugsweise zumindest teilweise während der Polymerisation kontinuierlich zugegeben. Zum Teil können Monomere auch im Polymerisationsgefäß vor Beginn der Polymerisation vorgelegt werden. Vorzugsweise werden maximal 30 Gew. % der Gesamtmenge der Monomeren, besonders bevorzugt maximal 20 Gew.

%, ganz besonders bevorzugt maximal 10 Gew. % der Monomeren im Polymerisationsgefäß vorgelegt. Die übrigen Monomeren, d.h. vorzugsweise mindestens 70 Gew. %, besonders bevorzugt mindestens 80 Gew. %, ganz besonders bevorzugt mindestens 90 Gew. % werden während der Polymerisation kontinuierlich zugegeben. In einer besonderen Ausführungsform werden keine Monomeren vorgelegt, d.h. die Gesamtmenge der Monomere wird während der Polymerisation zugefahren. Die einzelnen Komponenten können dem Reaktor beim Zulaufverfahren von oben, in der Seite oder von unten durch den Reaktorboden zugegeben werden.

In einer Ausführungsform der Erfindung erfolgt die Herstellung des Polymers einstufig.

Zur Entfernung der Restmonomeren kann auch nach dem Ende der eigentlichen Emulsionspolymerisation, d. h. nach einem Umsatz aller Monomeren weiterer Initiator zugesetzt werden (chemische Desodorierung). Bei der Emulsionspolymerisation werden wässrige Dispersionen des Polymeren in der Regel mit Feststoffgehalten von 15 bis 75 Gew.-%, bevorzugt von 40 bis 75 Gew.-% erhalten. Das so hergestellte Polymer wird vorzugsweise in Form seiner wässrigen Dispersion verwendet.

Die Größenverteilung der Dispersionsteilchen kann monomodal, bimodal oder multimodal sein. Bei monomodaler Teilchengrößenverteilung ist die mittlere Teilchengröße der in der wässrigen Dispersion dispergierten Polymerteilchen vorzugsweise kleiner 500 nm, insbesondere kleiner 400 nm. Besonders bevorzugt liegt die mittlere Teilchengröße zwischen 200 und 350 nm. Unter mittlerer Teilchengröße wird hier der $d_{50}$-Wert der Teilchengrößenverteilung verstanden, d.h. 50 Gew.-% der Gesamtmasse aller Teilchen haben einen kleineren Teilchendurchmesser als der $d_{50}$-Wert. Die Teilchengrößenverteilung kann in bekannter Weise mit der analytischen Ultrazentrifuge (W. Mächtle, Makromolekulare Chemie 185 (1984), Seite 1025 - 1039) bestimmt werden. Bei bi- oder multimodaler Teilchengrößenverteilung kann die Teilchengröße bis zu 1000 nm betragen. Der pH-Wert der Polymerdispersion wird vorzugsweise auf pH größer 4,5, insbesondere auf einen pH-Wert zwischen 5 und 8 eingestellt.

Die erfindungsgemäße Klebstoffdispersion kann Additive enthalten. Die Additive sind z.B. ausgewählt aus Füllstoffen, Farbstoffen, Verlaufshilfsmitteln, Verdickern, vorzugsweise Assoziativverdicker, Entschäumer, Weichmachern, Pigmenten, Netzmitteln, UV-Schutzmitteln und Tackifiern. Für eine bessere Benetzung von Oberflächen können die Klebstoffdispersionen insbesondere Benetzungshilfsmittel, z. B. Fettalkoholethoxylate, Alkylphenolethoxylate, Sulfobernsteinsäureester, Nonylphenolethoxylate, Polyoxyethylene/-propylene oder Natriumdodecylsulfonate enthalten. Die Menge beträgt im allgemeinen 0,05 bis 5 Gew.-Teile, insbesondere 0,1 bis 3 Gew.-Teile auf 100 Gew.-Teile Polymer (fest).

Die Klebstoffdispersionen werden erfindungsgemäß verwendet zur Folienkaschierung. Folienkaschierung ist das Verkleben von Folien, vorzugsweise Polymerfolien auf großflächigen Substraten zur Erzeugung von Laminaten. Bevorzugte Verwendung ist die Glanzfolienkaschierung. Bei der Glanzfolienkaschierung wird eine Polymerfolie, vorzugsweise eine transparente Polymerfolie, auf Papier, Karton oder Pappe verklebt.

In einer bevorzugten Ausführungsform wird die Klebstoffdispersion verwendet um eine transparente Polymerfolie auf ein Substrat zu kaschieren, wobei es sich bei dem Substrat um Papier, Karton oder Pappe handelt, wobei die Kaschierung unter Druck und Erwärmen erfolgt. Das Substrat ist vorzugsweise farbig und/oder bedruckt.

Die vorliegende Erfindung betrifft somit auch ein Verfahren zur Folienkaschierung, bei dem man die oben beschriebene Klebstoffdispersion einsetzt. Hierbei können die wässrigen Polymerdispersionen als solche oder nach Konfektionierung mit üblichen Hilfsstoffen eingesetzt werden. Übliche Hilfsstoffe sind beispielsweise Netzmittel, Verdicker, weitere Schutzkolloide, Lichtschutzstabilisatoren, Biozide, Entschäumer usw. Das Verfahren zur Folienkaschierung, insbesondere zur Glanzfolienkaschierung weist die folgenden Maßnahmen auf:

(i) Bereitstellen eines ersten Substrats, ausgewählt aus Polymerfolien, vorzugsweise aus transparenten Polymerfolien,
(ii) Bereitstellen eines zweiten Substrats, ausgewählt aus Papier, Karton und Pappe, wobei das zweite Substrat vorzugsweise bedruckt ist,
(iii) Aufbringen der oben näher beschriebenen Klebstoffdispersion auf mindestens eine Oberfläche des ersten und/oder des zweiten Substrats mit anschließendem Trocknungsschritt und
(iv) Laminieren der Polymerfolie auf das zweite Substrat.

Das Laminieren erfolgt in der Regel unter Druck und Erwärmen.

Bei dem erfindungsgemäßen Verfahren zur Folienkaschierung wird die erfindungsgemäße Polymerdispersion oder eine entsprechend konfektionierte Zubereitung auf die zu verklebenden, großflächigen Substrate vorzugsweise mit einer Schichtdicke von 0,1 bis 20 $g/m^2$, besonders bevorzugt 1 bis 10 $g/m^2$ z. B. durch Rakeln, Streichen etc. aufgetragen. Es können übliche Beschichtungsverfahren angewendet werden, z.B. Walzenstreichen, Gegenlaufwalzenstreichen, Gravurwalzenstreichen, Gegenlaufgravurwalzenstreichen, Bürstenstreichen, Stabstreichen, Sprühbeschichten, Luftbürstenbeschichtung, Meniskusbeschichtung, Vorhangbeschichtung oder Tauchbeschichtung. Nach kurzer Zeit zur Ablüftung des Dispersionswassers (vorzugsweise nach 1 bis 60 Sekunden) kann das beschichtete Substrat dann mit einem zweiten Substrat kaschiert werden, wobei die Temperatur z.B. 20 bis 200 °C, vorzugsweise 30 bis 100

°C und der Druck z. B. 100 bis 3000 $kN/m^2$, vorzugsweise 300 bis 2000 $kN/m^2$ betragen kann.

Vorzugsweise wird die erfindungsgemäße Klebstoffdispersion als Einkomponentenmittel angewendet, d.h. ohne zusätzliche Vernetzungsmittel, insbesondere ohne Isocyanatvernetzer. Jedoch kann die erfindungsgemäße Polymerdispersion auch als zweikomponentiger Klebstoff verwendet werden, bei dem eine zusätzliche Vernetzungskomponente, wie z.B. ein wasseremulgierbares Isocyanat, zugesetzt wird.

Vorzugsweise enthält die Klebstoffdispersion keine weiteren vernetzenden Komponenten, insbesondere keinen Fotoinitiator, keine Silanverbindung, keine Dihydrazide, insbesondere kein DAAM/ADDH und/oder keine Verbindung mit Ureidogruppen oder Ureido- analogen Substituenten.

Eine Ausführungsform der Erfindung ist ein Glanzfolienlaminat, hergestellt unter Verwendung einer der oben beschriebenen erfindungsgemäßen wässrigen Polymerdispersionen, wobei das Material einer transparenten Polymerfolie ausgewählt ist aus orientiertem Polypropylen (OPP), ungerecktem Polypropylen (CPP), Polyethylen (PE), Polyamid (PA), Polyethylenterephthalat (PET), Polyacetat und Zellophan und wobei das Material des zweiten Substrats ausgewählt ist aus Papier, Karton und Pappe. In einer Ausführungsform der Erfindung ist das zweite Substrat auf der Seite, welche mit der erfindungsgemäßen Polymerdispersion beschichtet wird, farbig oder bedruckt. Die Dicke der Polymerfolie kann beispielsweise von 5 bis 100 $\mu$m, vorzugsweise von 5 bis 40 $\mu$m betragen.

In einer bevorzugten Ausführungsform weist die Polymerfolie an der mit der Klebstoffdispersion in Kontakt kommenden Oberfläche hydrophile Gruppen auf. Hydrophile Gruppen sind z.B. Sauerstoff enthaltende Gruppen beispielsweise OH-Gruppen oder Säuregruppen. Die hydrophilen Gruppen werden vorzugsweise erzeugt durch Coronabehandlung zur Verstärkung der Haftwirkung. Die Coronabehandlung oder andere Oberflächenbehandlungen werden in dem Maße durchgeführt, wie für eine ausreichende Benetzbarkeit mit der Beschichtungszusammensetzung erforderlich ist. Üblicherweise ist eine Coronabehandlung von ungefähr 10 Watt pro Quadratmeter und Minute für diesen Zweck ausreichend. Alternativ oder zusätzlich können optional auch noch Primer oder Zwischenschichten zwischen Substrat und Klebstoffbeschichtung verwendet werden. Außerdem können die Glanzfolienlaminate weitere, zusätzliche funktionale Schichten aufweisen, z.B. Barriereschichten, Druckschichten, Farb- oder Lackschichten oder Schutzschichten. Die funktionalen Schichten können sich dabei außen, d.h. auf der mit Klebstoff beschichteten Seite abgewandten Seite des Substrats oder innen, zwischen Substrat und Klebstoffschicht befinden. Vorzugsweise wird als Polymerfolie eine coronabehandelte oPP-Folie verwendet.

Gegenstand der Erfindung ist auch ein Laminat, erhältlich durch das oben beschriebene Verfahren.

Gegenstand der Erfindung ist auch eine Klebstoffdispersion für die Folienkaschierung, insbesondere für die Glanzfolienkaschierung, welche die oben beschriebenen Merkmale aufweist, ausgenommen eine Klebstoffdispersion, enthaltend mindestens ein in Wasser dispergiertes Polymer P1, welches gebildet ist durch Emulsionspolymerisation aus einem Monomergemisch, enthaltend

(a) mindestens 40 Gew.% mindestens eines C4 bis C20 Alkyl(meth)acrylats, welches, wenn es als Homopolymer polymerisiert ist, eine Glasübergangstemperatur von -30 °C oder weniger aufweist,

(b) mindestens 0,05 Gew.% mindestens eines (Meth)acrylatmonomeren mit einem Substituenten der Formel

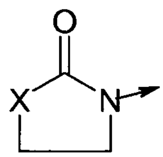

wobei X für $CH_2$, O, NH oder NR steht und R für eine C1 bis C4-Alkylgruppe steht,

(c) mindestens 0,1 Gew.% mindestens eines Säuremonomers,

und wobei entweder das Monomerengemisch mindestens 0,05 Gew.% Glycidyl(meth)acrylat enthält und/oder wobei die Klebstoffdispersion mindestens ein weiteres, vom Polymer P1 verschiedenes Polymer P2 enthält, welches Glycidylgruppen aufweist,

wobei die Angaben der Monomermengen jeweils auf die Summe aller Monomere bezogen sind.

Besondere Vorteile der erfindungsgemäßen Verwendung, des erfindungsgemäßen Herstellverfahrens und der erfindungsgemäßen Produkte sind insbesondere:

- hohe Nutstandfestigkeit von erfindungsgemäß erhältlichen genuteten Folienlaminaten
- hohe Prägefestigkeit von erfindungsgemäß erhältlichen geprägten Folienlaminaten
- hohe Schälfestigkeit.

Beispiele

Einsatzstoffe:

| | |
|---|---|
| nBA | n-Butylacrylat |
| MMA | Methylmethacrylat |
| AS | Acrylsäure |
| HEMA | 2-Hydroxyethylmethacrylat |
| S | Styrol |
| GMA | Glycidylmethacrylat (2,3-Epoxypropyl(meth)acrylat) |
| EHA | 2-Ethyl-hexylacrylat |

Beispiel 1: Herstellung der Polymerdispersionen:

Die Polymerdispersionen wurden mittels semi-kontinuierlicher Emulsionspolymerisation hergestellt. Dabei wurden die Teilchengrößen mittels einer Styrolsaat in der Reaktorvorlage kontrolliert: Die Mengenzusammensetzungen sind In Tabelle 1 zusammengestellt. Die Polymerdispersionen wurden mit einer 10 %-igen wässrigen Suspension von $Ca(OH)_2$ oder mit einer 25-%igen wässrigen Lsg. von Na(OH) auf eine pH-Wert zwischen 5,5 und 8,5 eingestellt.

Analog Beispiel 1 wurden nicht erfindungsgemäße Klebstoffdispersionen V1 bis V5 sowie erfindungsgemäße Klebstoffdispersionen B1 bis B10 durch Emulsionspolymerisation aus den in Tabelle 1 wiedergegebenen Monomerzusammensetzungen hergestellt. In den Beispielen kann nBa auch gegen EHA ausgetauscht werden.

Tabelle 1: Monomerzusammensetzungen zur Herstellung der Klebstoffdispersionen V1 bis V5 und B1 bis B10, Mengenangaben in Gewichtsteilen

| Beispiel | nBA | MMA | S | AS | HEMA | GMA | SAAT | Neut.[1] |
|---|---|---|---|---|---|---|---|---|
| V1 | 76,20 | 21,80 | - | 2 | 0 | 0 | 0,1 | $Ca(OH)_2$ |
| V2 | 74,20 | 17,80 | - | 0 | 6 | 0 | 0,1 | $Ca(OH)_2$ |
| V3 | 74,20 | 17,80 | - | 0 | 6 | 0 | 0,1 | NaOH |
| V4 | 76,20 | 21,80 | - | 0 | 0 | 2 | 0,1 | $Ca(OH)_2$ |
| V5 | 76,20? | 21,80 | - | 0 | 0 | 2 | 0,1 | NaOH |
| B1 | 74,20 | - | 17,80 | 0 | 6 | 2 | 0,1 | $Ca(OH)_2$ |
| B2 | 74,20 | 17,80 | - | 0 | 6 | 2 | 0,1 | $Ca(OH)_2$ |
| B3 | 73,20 | 17,80 | - | 1 | 6 | 2 | 0,1 | $Ca(OH)_2$ |
| B4 | 73,20 | - | 17,80 | 1 | 6 | 2 | 0,1 | $Ca(OH)_2$ |
| B5 | 73,20 | 17,80 | - | 2 | 4 | 3 | 0,1 | Na(OH) |
| B6 | 71,20 | 0 | 17,80 | 2 | 8 | 1 | 0,1 | Na(OH) |
| B7 | 72,20 | 17,80 | - | 2 | 6 | 2 | 0,1 | NaOH |
| B8 | 72,20 | - | 17,80 | 2 | 6 | 2 | 0,1 | NaOH |
| B9 | 72,20 | 17,80 | - | 2 | 6 | 2 | 0,1 | $Ca(OH)_2$ |
| B10 | 72,20 | - | 17,80 | 2 | 6 | 2 | 0,1 | $Ca(OH)_2$ |
| [1] Neutralisationsmittel | | | | | | | | |

Anwendungstechnische Prüfungen:

Es wurden Glanzfolienkaschierungen durchgeführt mit Polypropylenfolie (oPP, Coronavorbehandelt) auf Papier.

Bestimmung der Nut- und Prägestandfestigkeit:

Eine oPP-Folie (40 µm) wird auf corona-vorbehandelten Seite beschichtet (Auftragsgewicht: 6-8 g/$m^2$ trocken). Der Kleber wird für 2 Minuten mit einem Kaltluftgebläse getrocknet und dann der bedruckte Karton in der Rollenkaschierstation bei 70° C, mit einer Walzengeschwindigkeit von 5 m/Minute und einem Kaschierdruck von 6,5 bar auf die beschichtete Folie aufgepresst. Die so hergestellte Kaschierung wird vor der Nutung und Prägung mindestens 24 Stunden bei Raumtemperatur gelagert.

Nutung:

Zur Prüfung werden die Kaschierungen in einer Hebelpresse mit Nuteinrichtung einmal von oben (Folienseite) genutet, umgedreht (Kartonseite) und in ca. 3 cm Abstand von der ersten Nut parallel dazu genutet, erneut umgedreht (Folienseite) und quer zur ersten Nut genutet, wieder umgedreht (Kartonseite) und in ca. 3 cm Abstand von der dritten Nut parallel dazu genutet. Die Nuten werden nach vorgewählten Lagerzeiten auf Ablösung der Kaschierfolie vom Karton geprüft. Kritische Punkte sind die scharfen Kanten am Rand einer Nut sowie die Kreuzungspunkte der erhabenen und vertieften Nuten.

Prägung:

Zur Prüfung werden die Kaschierungen in einem Walzenstuhl mit Prägewalze auf der Folienseite geprägt. Die Prägungen werden nach vorgewählten Lagerzeiten auf Ablösung der Kaschierfolie vom Karton geprüft.

Beurteilung:

1 Nut bzw. Prägung ist vollständig in Ordnung
2 Nut bzw. Prägung ist an einzelnen Stellen leicht geöffnet
3 Nut bzw. Prägung ist an einzelnen Stellen deutlich geöffnet
4 Nut bzw. Prägung ist vollständig offen

Bestimmung der Schälfestigkeit:

Das Laminat (s.o.) wird in 15 mm breite Streifen geschnitten und 7 Tage bei Normklima (23° C, 50% relative Luftfeuchte) gelagert. Nach der Lagerung wird der Laminatstreifen bei 23°C im Winkel von 180° mit einer Geschwindigkeit von 300 m/min abgezogen, somit wird die Schälkraft in N/15 mm bestimmt.

Die Testergebnisse sind in Tabelle 2 zusammengefasst.

Tabelle 2: Testergebnisse Nut- und Prägefestigkeit; Schälwerte

| Beispiel | Nutung 1d | Prägung 1d | Nutung 7d | Prägung 7d | Schälwert [N/15 mm] |
|---|---|---|---|---|---|
| V1 | 2 | 1 | 3 | 1 | 3,7 |
| V2 | 1 | 3 | 1 | 4 | 2,7 |
| V3 | 1 | 3 | 1 | 3 | 2,8 |
| V4 | 1 | 3 | 1 | 4 | 1,8 |
| V5 | 1 | 3 | 1 | 4 | 2,4 |
| B1 | 1 | 1 | 1 | 1 | 4,0 |
| B2 | 1 | 1 | 1 | 1 | 3,1 |
| B3 | 1 | 1 | 1 | 2 | 3,6 |
| B4 | 1 | 1 | 1 | 1 | 3,8 |
| B5 | 1 | 1 | 1 | 1 | 3,0 |
| B6 | 1 | 1 | 1 | 1 | 3,2 |
| B7 | 1 | 1 | 1 | 1 | 3,8 |

(fortgesetzt)

| Beispiel | Nutung 1d | Prägung 1d | Nutung 7d | Prägung 7d | Schälwert [N/15 mm] |
|---|---|---|---|---|---|
| B8 | 1 | 1 | 1 | 1 | 4,3 |
| B9 | 1 | 1 | 1 | 1 | 4,3 |
| B10 | 1 | 1 | 1 | 1 | 4,3 |

Die Ergebnisse zeigen, dass die Verwendung einer Monomerkombination von HEMA und GMA zu einer sehr guten Nut- und Prägefestigkeit der Laminate führt.

Besondere Vorteile der erfindungsgemäßen Verwendung, des erfindungsgemäßen Herstellverfahrens und der erfindungsgemäßen Produkte sind insbesondere:

- hohe Nutstandfestigkeit von erfindungsgemäß erhältlichen genuteten Folienlaminaten
- hohe Prägefestigkeit von erfindungsgemäß erhältlichen geprägten Folienlaminaten
- hohe Schälfestigkeit.

## Patentansprüche

**1.** Verwendung einer Klebstoffdispersion für die Glanzfolienkaschierung, wobei die Klebstoffdispersion mindestens ein in Wasser dispergiertes Polymer enthält, welches gebildet ist durch Emulsionscopolymerisation aus einem Monomergemisch, enthaltend

(a) mindestens 40 Gew.%, vorzugsweise 50 bis 98,4 Gew.% mindestens eines Hauptmonomeren, ausgewählt aus C1 bis C20 Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen (Meth)acrylamide oder Mischungen dieser Monomeren;
(b) mindestens 1 Gew.%, vorzugsweise 2 bis 20 Gew.% mindestens eines C1 bis C20 Hydroxyalkyl(meth)acrylats,
(c) mindestens 0,6 Gew.%, vorzugsweise 1 bis 5 Gew.% mindestens eines ethylenisch ungesättigten, radikalisch polymerisierbaren Monomers mit mindestens einer Glycidylgruppe,
(d) 0 bis 10 Gew.%, vorzugsweise 0,1 bis 5 Gew.% mindestens eines Säuremonomers.

**2.** Verwendung nach dem vorhergehenden Anspruch, **dadurch gekennzeichnet, dass** als Monomere (a) eine Monomermischung eingesetzt wird enthaltend

(a1) mindestens 40 Gew.%, vorzugsweise 50 bis 80 Gew.% mindestens eines weichen Monomers, welches, wenn es als Homopolymer polymerisiert ist, eine Glasübergangstemperatur von 0 °C oder weniger, vorzugsweise von -20 °C oder weniger aufweist und
(a2) mindestens 1 Gew.%, vorzugsweise 5 bis 30 Gew.% mindestens eines harten Monomers, welches, wenn es als Homopolymer polymerisiert ist, eine Glasübergangstemperatur von mehr als 0 °C oder 20 °C oder mehr, vorzugsweise von 50 °C oder mehr aufweist.

**3.** Verwendung nach dem vorhergehenden Anspruch, **dadurch gekennzeichnet, dass** die Monomere (a1) ausgewählt sind aus C4-C10 Alkylacrylaten, vorzugsweise aus n-Butylacrylat, n-Hexylacrylat, Octylacrylat und 2-Ethylhexylacrylat sowie Mischungen dieser Monomere und die Monomere (a2) ausgewählt sind aus von den Monomeren (a1) verschiedenen C1-C10 Alkyl(meth)acrylaten und Vinylaromaten, vorzugsweise aus Methylmethacrylat, Styrol und deren Gemisch.

**4.** Verwendung nach einem der vorhergehenden Ansprüche, **dadurch gekennzeichnet, dass** Monomer (b) ausgewählt ist aus Hydroxyethyl(meth)acrylat, Hydroxypropyl(meth)acrylat, Hydroxybutyl(meth)acrylat und deren Gemisch.

**5.** Verwendung nach einem der vorhergehenden Ansprüche, **dadurch gekennzeichnet, dass** Monomer (c) Glycidyl(meth)acrylat ist.

6. Verwendung nach einem der vorhergehenden Ansprüche, **dadurch gekennzeichnet, dass** die Glasübergangstemperatur des Polymers kleiner als 15°C ist.

7. Verwendung nach einem der vorhergehenden Ansprüche, **dadurch gekennzeichnet, dass** das Gewichtsverhältnis von Monomer (b) zu Monomer (c) von 1:20 bis 20 : 1, vorzugsweise 2:1 bis 10:1 beträgt.

8. Verwendung nach einem der vorhergehenden Ansprüche, **dadurch gekennzeichnet, dass** die Monomere (d) ausgewählt sind aus Acrylsäure und Methacrylsäure.

9. Verwendung nach einem der vorhergehenden Ansprüche, **dadurch gekennzeichnet, dass** das Polymer erhältlich ist durch Emulsionspolymerisation aus einem Monomergemisch, enthaltend

    (a1) 50 bis 80 Gew.% mindestens eines weichen Monomers, ausgewählt aus der Gruppe bestehend aus n-Butylacrylat, n-Hexylacrylat, Octylacrylat und 2-Ethylhexylacrylat sowie Mischungen dieser Monomere,
    (a2) 5 bis 30 Gew.% mindestens eines harten Monomers, ausgewählt aus der Gruppe bestehend aus Methylmethacrylat, Styrol und deren Mischung,
    (b) 2 bis 20 Gew.% mindestens eines C1 bis C10 Hydroxyalkyl(meth)acrylats,
    (c) 0,6 bis 5 Gew.% Glycidyl(meth)acrylat und
    (d) 0 bis 5 Gew.% mindestens eines Säuremonomers, ausgewählt aus Acrylsäure, Methacrylsäure und deren Gemisch.

10. Verwendung nach einem der vorhergehenden Ansprüche, **dadurch gekennzeichnet, dass** die Klebstoffdispersion Additive enthält, ausgewählt aus Füllstoffen, Farbstoffen, Verlaufshilfsmitteln, Verdickern, Entschäumer, Weichmachern, Pigmenten, Netzmitteln, UV-Schutzmitteln und Tackifiern.

11. Verwendung gemäß einem der vorhergehenden Ansprüche, **dadurch gekennzeichnet, dass** die Herstellung des Polymers einstufig erfolgt.

12. Verwendung nach einem der vorhergehenden Ansprüche, wobei ein erstes Substrat mit einem zweiten Substrat laminiert wird, wobei es sich bei dem ersten Substrat um eine transparente Polymerfolie und bei dem zweiten Substrat um Papier, Karton oder Pappe handelt, wobei die Kaschierung unter Druck und Erwärmen erfolgt.

13. Verfahren zur Glanzfolienkaschierung, welches die folgenden Maßnahmen aufweist:

    (i) Bereitstellen eines ersten Substrats, ausgewählt aus Polymerfolien, vorzugsweise aus transparenten Polymerfolien,
    (ii) Bereitstellen eines zweiten Substrats, ausgewählt aus Papier, Karton und Pappe, wobei das zweite Substrat vorzugsweise bedruckt ist,
    (iii) Aufbringen einer Klebstoffdispersion, welche die auf die Klebstoffdispersion bezogenen Merkmale der vorhergehenden Verwendungsansprüche aufweist, auf mindestens eine Oberfläche des ersten und/oder des zweiten Substrats mit anschließendem Trocknungsschritt und
    (iv) Laminieren der Polymerfolie auf das zweite Substrat.

14. Verfahren nach dem vorhergehenden Anspruch, **dadurch gekennzeichnet, dass** mindestens eine der Polymerfolien an der mit der Klebstoffdispersion in Kontakt kommenden Oberfläche hydrophile Gruppen aufweist, vorzugsweise erzeugt durch Coronabehandlung.

15. Verfahren nach dem vorhergehenden Anspruch, **dadurch gekennzeichnet, dass** die Polymerfolie eine coronabehandelte oPP-Folie ist.

16. Laminat, erhältlich durch das Verfahren gemäß einem der vorhergehenden Verfahrensansprüche.

17. Klebstoffdispersion für die Glanzfolienkaschierung, welche die auf die Klebstoffdispersion bezogenen Merkmale der vorhergehenden Verwendungsansprüche aufweist, ausgenommen eine Klebstoffdispersion, enthaltend mindestens ein in Wasser dispergiertes Polymer P1, welches gebildet ist durch Emulsionspolymerisation aus einem Monomergemisch, enthaltend

    (a) mindestens 40 Gew.% mindestens eines C4 bis C20 Alkyl(meth)acrylats, welches, wenn es als Homopolymer

polymerisiert ist, eine Glasübergangstemperatur von -30 °C oder weniger aufweist,
(b) mindestens 0,05 Gew.% mindestens eines (Meth)acrylatmonomeren mit einem Substituenten der Formel

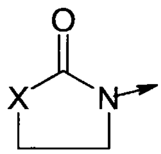

wobei X für $CH_2$, O, NH oder NR steht und R für eine C1 bis C4-Alkylgruppe steht,
(c) mindestens 0,1 Gew.% mindestens eines Säuremonomers,
und wobei entweder das Monomerengemisch mindestens 0,05 Gew.% Glycidyl(meth)acrylat enthält und/oder wobei die Klebstoffdispersion mindestens ein weiteres, vom Polymer P1 verschiedenes Polymer P2 enthält, welches Glycidylgruppen aufweist,
wobei die Angaben der Monomermengen jeweils auf die Summe aller Monomere bezogen sind.

## Claims

**1.** The use of an adhesives dispersion for high-gloss film lamination, the adhesives dispersion comprising at least one polymer in dispersion in water and formed by emulsion copolymerization of a monomer mixture comprising

(a) at least 40 wt%, preferably 50 to 98.4 wt%, of at least one principal monomer, selected from C1 to C20 alkyl (meth)acrylates, vinyl esters of carboxylic acids comprising up to 20 C atoms, vinylaromatics having up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, and (meth)acrylamides, or mixtures of these monomers;
(b) at least 1 wt%, preferably 2 to 20 wt%, of at least one C1 to C20 hydroxyalkyl (meth)acrylate,
(c) at least 0.6 wt%, preferably 1 to 5 wt%, of at least one ethylenically unsaturated, radically polymerizable monomer having at least one glycidyl group,
(d) 0 to 10 wt%, preferably 0.1 to 5 wt%, of at least one acid monomer.

**2.** The use according to the preceding claim, wherein monomers (a) used comprise a monomer mixture comprising

(a1) at least 40 wt%, preferably 50 to 80 wt%, of at least one soft monomer which if polymerized as a homopolymer has a glass transition temperature of 0°C or less, preferably of -20°C or less, and
(a2) at least 1 wt%, preferably 5 to 30 wt%, of at least one hard monomer which if polymerized as a homopolymer has a glass transition temperature of more than 0°C or 20°C or more, preferably of 50°C or more.

**3.** The use according to the preceding claim, wherein the monomers (a1) are selected from C4-C10 alkyl acrylates, preferably from n-butyl acrylate, n-hexyl acrylate, octyl acrylate, and 2-ethylhexyl acrylate and also mixtures of these monomers, and the monomers (a2) are selected from C1-C10 alkyl (meth)acrylates other than the monomers (a1), and from vinylaromatics, preferably from methyl methacrylate, styrene, and a mixture thereof.

**4.** The use according to any of the preceding claims, wherein monomer (b) is selected from hydroxyethyl (meth)acrylate, hydroxypropyl (meth)acrylate, hydroxybutyl (meth)acrylate, and a mixture thereof.

**5.** The use according to any of the preceding claims, wherein monomer (c) is glycidyl (meth)acrylate.

**6.** The use according to any of the preceding claims, wherein the glass transition temperature of the polymer is less than 15°C.

**7.** The use according to any of the preceding claims, wherein the weight ratio of monomer (b) to monomer (c) is from 1:20 to 20:1, preferably 2:1 to 10:1.

**8.** The use according to any of the preceding claims, wherein the monomers (d) are selected from acrylic acid and methacrylic acid.

9. The use according to any of the preceding claims, wherein the polymer is obtainable by emulsion polymerization of a monomer mixture comprising

(a1)50 to 80 wt% of at least one soft monomer selected from the group consisting of n-butyl acrylate, n-hexyl acrylate, octyl acrylate, and 2-ethylhexyl acrylate, and also mixtures of these monomers,
(a2)5 to 30 wt% of at least one hard monomer selected from the group consisting of methyl methacrylate, styrene, and a mixture thereof,
(b) 2 to 20 wt% of at least one C1 to C10 hydroxyalkyl (meth)acrylate,
(c) 0.6 to 5 wt% of glycidyl (meth)acrylate, and
(d) 0 to 5 wt% of at least one acid monomer selected from acrylic acid, methacrylic acid, and a mixture thereof.

10. The use according to any of the preceding claims, wherein the adhesives dispersion comprises additives selected from fillers, dyes, flow control assistants, thickeners, defoamers, plasticizers, pigments, wetting agents, UV stabilizers, and tackifiers.

11. The use according to any of the preceding claims, wherein the polymer is prepared in one stage.

12. The use according to any of the preceding claims, where a first substrate is laminated to a second substrate, the first substrate being a transparent polymeric film and the second substrate being paper, card, or board, and the lamination taking place under pressure and with heating.

13. A method for high-gloss film lamination, having the following measures:

(i) providing a first substrate selected from polymeric films, preferably from transparent polymeric films,
(ii) providing a second substrate selected from paper, card, and board, the second substrate preferably being printed,
(iii) applying an adhesives dispersion having the features relevant to the adhesives dispersion from the preceding use claims, to at least one surface of the first and/or second substrate(s), with a subsequent drying step, and
(iv) laminating the polymeric film onto the second substrate.

14. The method according to the preceding claim, wherein at least one of the polymeric films has hydrophilic groups on the surface that comes into contact with the adhesives dispersion which are preferably generated by corona treatment.

15. The method according to the preceding claim, wherein the polymeric film is a corona-treated oPP film.

16. A laminate obtainable by the method according to any of the preceding method claims.

17. An adhesives dispersion for high-gloss film lamination, having the features relevant to the adhesives dispersion from the preceding use claims, excepting an adhesives dispersion comprising at least one polymer P1, which is in dispersion in water and is formed by emulsion polymerization of a monomer mixture comprising

(a) at least 40 wt% of at least one C4 to C20 alkyl (meth)acrylate, which if polymerized as a homopolymer has a glass transition temperature of -30°C or less,
(b) at least 0.05 wt% of at least one (meth)acrylate monomer having a substituent of the formula

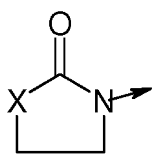

where X is $CH_2$, 0, NH or NR and R is a C1 to C4 alkyl group,
(c) at least 0.1 wt% of at least one acid monomer, and where either the monomer mixture comprises at least 0.05 wt% of glycidyl (meth)acrylate and/or where the adhesives dispersion comprises at least one further polymer P2 which is different from the polymer P1 and which has glycidyl groups,
the figures for the monomer amounts being based in each case on the sum total of all the monomers.

## Revendications

1. Utilisation d'une dispersion d'adhésif pour le contrecollage de feuilles brillantes, la dispersion d'adhésif contenant au moins un polymère dispersé dans l'eau qui est formé par copolymérisation en émulsion à partir d'un mélange de monomères, contenant

   (a) au moins 40% en poids, de préférence 50 à 98,4% en poids, d'au moins un monomère principal, choisi parmi les (méth)acrylates d'alkyle en C1 à C20, les esters vinyliques d'acides carboxyliques contenant jusqu'à 20 atomes de carbone, les aromatiques de vinyle comprenant jusqu'à 20 atomes de carbone, les nitriles éthyléniquement insaturés, les halogénures de vinyle, les vinyléthers d'alcools contenant 1 à 10 atomes de carbone, les hydrocarbures aliphatiques comprenant 2 à 8 atomes de carbone et une ou deux doubles liaisons ainsi que les (méth)acrylamides ou des mélanges de ces monomères ;
   (b) au moins 1% en poids, de préférence 2 à 20% en poids d'au moins un (méth)acrylate d'hydroxyalkyle en C1 à C20,
   (c) au moins 0,6% en poids, de préférence 1 à 5% en poids, d'au moins un monomère éthyléniquement insaturé, polymérisable par voie radicalaire présentant au moins un groupe glycidyle,
   (d) 0 à 10% en poids, de préférence 0,1 à 5% en poids, d'au moins un monomère acide.

2. Utilisation selon la revendication précédente, **caractérisée en ce qu'**on utilise, comme monomères (a), un mélange de monomères contenant

   (a1) au moins 40% en poids, de préférence 50 à 80% en poids, d'au moins un monomère souple qui, lorsqu'il est polymérisé sous forme d'homopolymère, présente une température de transition vitreuse de 0°C ou moins, de préférence de -20°C ou moins et
   (a2) au moins 1% en poids, de préférence 5 à 30% en poids, d'au moins un monomère dur qui, lorsqu'il est polymérisé sous forme d'homopolymère, présente une température de transition vitreuse de plus de 0°C ou de 20°C ou plus, de préférence de 50°C ou plus.

3. Utilisation selon la revendication précédente, **caractérisée en ce que** les monomères (a1) sont choisis parmi les acrylates d'alkyle en C4 à C10, de préférence parmi l'acrylate de n-butyle, l'acrylate de n-hexyle, l'acrylate d'octyle et l'acrylate de 2-éthylhexyle ainsi que des mélanges de ces monomères et les monomères (a2) sont choisis parmi les (méth)acrylates d'alkyle en C1 à C10 différents des monomères (a1) et les aromatiques de vinyle, de préférence parmi le méthacrylate de méthyle, le styrène et leur mélange.

4. Utilisation selon l'une quelconque des revendications précédentes, **caractérisée en ce que** le monomère (b) est choisi parmi le (méth)acrylate d'hydroxyéthyle, le (méth)acrylate d'hydroxypropyle, le (méth)acrylate d'hydroxybutyle et leur mélange.

5. Utilisation selon l'une quelconque des revendications précédentes, **caractérisée en ce que** le monomère (c) est le (méth)acrylate de glycidyle.

6. Utilisation selon l'une quelconque des revendications précédentes, **caractérisée en ce que** la température de transition vitreuse du polymère est inférieure à 15°C.

7. Utilisation selon l'une quelconque des revendications précédentes, **caractérisée en ce que** le rapport pondéral du monomère (b) au monomère (c) est de 1:20 à 20:1, de préférence de 2:1 à 10:1.

8. Utilisation selon l'une quelconque des revendications précédentes, **caractérisée en ce que** les monomères (d) sont choisis parmi l'acide acrylique et l'acide méthacrylique.

9. Utilisation selon l'une quelconque des revendications précédentes, **caractérisée en ce que** le polymère peut être obtenu par polymérisation en émulsion à partir d'un mélange de monomères contenant

   (a1) 50 à 80% en poids d'au moins un monomère souple choisi dans le groupe constitué par l'acrylate de n-butyle, l'acrylate de n-hexyle, l'acrylate d'octyle, l'acrylate de 2-éthylhexyle ainsi que les mélanges de ces monomères,
   (a2) 5 à 30% en poids d'au moins un monomère dur, choisi dans le groupe constitué par le méthacrylate de méthyle, le styrène et leur mélange,

(b) 2 à 20% en poids d'au moins un (méth)acrylate d'hydroxyalkyle en C1 à C10,
(c) 0,6 à 5% en poids de (méth)acrylate de glycidyle et
(d) 0 à 5% en poids d'au moins un monomère acide, choisi parmi l'acide acrylique, l'acide méthacrylique et leur mélange.

**10.** Utilisation selon l'une quelconque des revendications précédentes, **caractérisée en ce que** la dispersion d'adhésif contient des additifs, choisis parmi les charges, les colorants, les adjuvants d'étalement, les épaississants, les antimousses, les plastifiants, les pigments, les agents mouillants, les agents de protection contre les UV et les agents poisseux.

**11.** Utilisation selon l'une quelconque des revendications précédentes, **caractérisée en ce que** la préparation du polymère s'effectue en une étape.

**12.** Utilisation selon l'une quelconque des revendications précédentes, un premier substrat étant stratifié avec un deuxième substrat, le premier substrat étant une feuille polymère transparente et le deuxième substrat étant du papier, du carton ou du carton-pâte, le contrecollage s'effectuant sous pression et en chauffant.

**13.** Procédé pour le contrecollage d'une feuille brillante, qui présente les mesures suivantes :

(i) mise à disposition d'un premier substrat choisi parmi les feuilles polymères, de préférence parmi les feuilles polymères transparentes,
(ii) mise à disposition d'un deuxième substrat, choisi parmi le papier, le carton et le carton-pâte, le deuxième substrat étant de préférence imprimé,
(iii) application d'une dispersion d'adhésif, qui présente les caractéristiques se rapportant à la dispersion d'adhésif des revendications d'utilisation ci-dessus, sur au moins une surface du premier et/ou du deuxième substrat avec une étape de séchage consécutive et
(iv) stratification de la feuille polymère sur le deuxième substrat.

**14.** Procédé selon la revendication précédente, **caractérisé en ce qu'**au moins une des feuilles polymères présente, sur la surface qui entre en contact avec la dispersion d'adhésif, des groupes hydrophiles, de préférence générés par traitement au corona.

**15.** Procédé selon la revendication précédente, **caractérisé en ce que** la feuille polymère est une feuille d'oPP traitée au corona.

**16.** Stratifié, pouvant être obtenu par le procédé selon l'une quelconque des revendications de procédé ci-dessus.

**17.** Dispersions d'adhésif pour le contrecollage de feuilles brillantes, qui présentent les caractéristiques se rapportant à la dispersion d'adhésif des revendications d'utilisation ci-dessus, à l'exception d'une dispersion d'adhésif contenant au moins un polymère P1 dispersé dans l'eau qui est formé par polymérisation en émulsion à partir d'un mélange de monomères contenant

(a) au moins 40% en poids d'au moins un (méth)acrylate d'alkyle en C4 à C20 qui, lorsqu'il est polymérisé sous forme d'homopolymère, présente une température de transition vitreuse de -30°C ou moins,
(b) au moins 0,05% en poids d'au moins un monomère de (méth)acrylate présentant un substituant de formule

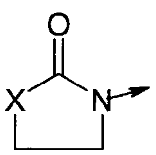

X représentant $CH_2$, 0, NH ou NR et R représentant un groupe alkyle en C1 à C4,
(c) au moins 0,1% en poids d'au moins un monomère acide et soit le mélange de monomères contenant 0,05% en poids de (méth)acrylate de glycidyle et/ou la dispersion d'adhésif contenant au moins un autre polymère P2 différent du polymère P1, qui contient des groupes glycidyle,
les indications des quantités de monomères se rapportant à chaque fois à la somme de tous les monomères.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9823656 A
- WO 0050480 A
- EP 0622434 A1
- EP 900651 A
- DE 102005022166 A1
- EP 1171539 A
- EP 0148386 A
- EP 81083 A


### In der Beschreibung aufgeführte Nicht-Patentliteratur


- **T.G. FOX.** *Bull. Am. Phys. Soc.,* 1956, vol. 1, 123
- Ullmann’s Encyclopädie der technischen Chemie. Verlag Chemie, 1980, vol. 19, 18
- Ullmann’s Encyclopedia of Industrial Chemistry. VCH, 1992, vol. 5, 169
- **J. BRANDRUP ; E.H. IMMERGUT.** Polymer Handbook. J. Wiley, 1966
- POLYMER HANDBOOK. J. Wiley, 1975
- POLYMER HANDBOOK. J. Wiley, 1989
- Methoden der organischen Chemie. **HOUBEN-WEYL.** Makromolekulare Stoffe. Georg-Thieme-Verlag, 1961, vol. XIV/1, 411-420
- **W. MÄCHTLE.** *Makromolekulare Chemie,* 1984, vol. 185, 1025-1039